(19) Europäisches Patentamt

European Patent Office

Office européen des brevets

(11) **EP 1 734 622 A1**

(12) **EUROPEAN PATENT APPLICATION**

(43) Date of publication:
**20.12.2006 Bulletin 2006/51**

(51) Int Cl.:
***H01S 3/23*** *(2006.01)*

(21) Application number: **05291269.8**

(22) Date of filing: **13.06.2005**

| | |
|---|---|
| (84) Designated Contracting States:<br>**AT BE BG CH CY CZ DE DK EE ES FI FR GB GR**<br>**HU IE IS IT LI LT LU MC NL PL PT RO SE SI SK TR**<br>Designated Extension States:<br>**AL BA HR LV MK YU**<br><br>(71) Applicant: **KEOPSYS**<br>**22300 Lannion (FR)**<br><br>(72) Inventors:<br>• **Williams, Glen M.**<br>**Alexandria**<br>**Virginia 22302 (US)** | • **Vitre, Christophe**<br>**22200 Guingamp (FR)**<br>• **Laurent, Arnaud**<br>**22700 Saint Quay Perros (FR)**<br>• **Delavaux, Jean Marc**<br>**Pittstown**<br>**New Jersey 08867 (US)**<br>• **Le Flohic, Marc**<br>**22700 Saint Quay Perros (FR)**<br><br>(74) Representative: **Breese Derambure Majerowicz**<br>**38, avenue de l'Opéra**<br>**75002 Paris (FR)** |

(54) **Methods of reduction of amplified spontaneous emission (ASE) in pulsed Master Oscillator Pulsed Amplifier (MOPA) fiber laser systems**

(57)     We present methods for the reduction of background Amplified Stimulated Emission ASE in pulsed fiber laser systems operated in Master Oscillator Power Amplifier MOPA configurations. Application of rare earth-doped fiber laser MOPA's to low repetition rate, high energy-per-pulse, systems is typically limited by ASE that diminishes the energy available in the pulses and increases the noise level in between pulses. In particular, the ASE also serves as a source of noise in various sensing and communication systems, reducing the signal-to-noise level. In addition, high ASE levels can result in other detrimental effects such as, parasitic lasing at wavelengths other than the signal wavelength or at times other than the signal pulse time, and conversion of signal energy to other wavelengths through non-linear four wave-mixing processes. The novel techniques presented for reduction of ASE include spectral and temporal filtering and pump modulation. The techniques described can be employed over a wide range of ambient operating temperatures.

FIGURE 1.

EP 1 734 622 A1

**Description**

**1. Background of Invention**

Fiber laser sources offer an unique combination of low power consumption, lightweight, small size, low cost, and robustness not found in other laser sources. This makes them an excellent choice for many applications. A number of applications require pulsed or modulated source output. These applications include, but are not limited to, communications, ranging, remote sensing, 3D imaging, obstacle detection, and target designation. A simple configuration to achieve pulses is a master oscillator power amplifier (MOPA) design in which the master oscillator is a fiber pigtailed semi-conductor diode laser and the amplifier consists of single or multiple gain sections of rare earth-doped fiber. The optical signal originating from the diode laser may be pulsed directly by modulating the drive current to the diode laser or indirectly by using an external optical modulator that can be electronically controlled. The output power of the diode alone is insufficient for most applications so that it is necessary to follow the diode with a fiber-based optical amplifier.

All the applications listed above include a laser transmitter and a receiver, either detecting the laser light directly or reflections of the laser light. The usefulness of the system will ultimately be limited by the signal light level incident on the receiver compared to background light level, statistical fluctuations in signal light itself, and the equivalent light level associated with inherent electrical noise in the receiver. The three sources of noise can be all be limited in effect relative to the signal by simply increasing the amount of optical energy in the signal pulses. This increase in energy-per-pulse can be accomplished by either increasing the pump power to the fiber amplifier, increasing the timed-average output power of the amplifier, or by maintaining constant pump power, but decreasing the repetition rate of the pulses. The later process maintains constant time-averaged output power, but increases the energy per pulse. In addition, some applications require repetition rates below some maximum value. One example of such an application is ranging, in which it is necessary to limit pulse repetition rate in order to avoid ambiguities in the return signal.

However, there are difficulties with operating fiber amplifiers at lowered signal repetition rates. The three fundamental limitations are; (1) Optical non-linearities in the fiber amplifier as the peak power of the pulses increase, (2) Gain depletion in the amplifier during the pulse, (3) Increase in ASE output from the fiber amplifier between the pulses as the time between pulses increases. Increase in ASE, not only limits signal output energy, but may also contribute as a noise source in many applications. In addition, high ASE levels can result in other detrimental effects such as, parasitic lasing at wavelengths other than the signal wavelength, and conversion of signal energy to other wavelengths through non-linear four wave-mixing processes. In this invention we teach various methods for decreasing the ASE output.

**2. Brief Description of the Invention**

The fiber amplifier consists of one or more gain sections of rare earth-doped fibers. Each gain section is pumped by a laser diode(s). The pump light is absorbed and provides the population inversion necessary for signal gain in the amplifier. The input signal experiences gain from stimulated emission process in the fiber. Spontaneous emission also occurs in the fiber. Some of the spontaneous emission is guided in the fiber and will also experience gain leading to amplified spontaneous emission (ASE). The ASE competes with the signal for the available gain in the fiber. Thus, increases in ASE result in decreases in signal output. The amount of signal output relative to ASE output is a function of, amongst other parameters, the number of input signal photons into the amplifier. A large input of signal photons will lower the inversion (extracting most of the available energy), lowering or saturating the amplifier gain. The saturation of the gain robs the spontaneous emission of the large gain it requires to build up to significant power levels.

In a standard pulsed system the fiber is generally continuously pumped but the signal is inputted only periodically. During the signal pulse the gain in the amplifier is reduced to the saturation level. However, between pulses the only input into the amplifier is from spontaneous emission. If the time between pulses is long enough such that there is sufficient generation of spontaneous emission and also the pump can re-institute the gain in the amplifier to high levels, there will be significant ASE output.

In this invention we propose three general techniques for reduction of the ASE level from pulsed fiber amplifiers. These techniques can be used individually or in combination to reduce ASE levels.

**Spectral Filtering**

The ASE output is usually significantly spectrally broader than the signal output. Spectral filtering of the output (introducing a narrow band-pass filter which passes the signal wavelength) can eliminate much of the ASE, but does not solve the issue of the reduction in signal power in the amplifier resulting from the ASE gain competition (especially at low pulse repetition rate,<10kHz, where the gain can be high). However, one can consider a multi-stage amplifier in which the spectral filtering is implemented between stages (such an implementation might also include a spectral filter in a multi-pass amplifier configuration). In this instance, ASE gain competition in amplifier stages following the spectral filter is reduced and signal output level is increased.

In many applications overall power consumption needs to be kept at a minimum. To accomplish this goal the laser diode serving as the master oscillator (master laser diode) may be un-cooled. In general, the output wavelength of master laser diode is a function of temperature. Thus, the output wavelength of an un-cooled laser diode will vary as the ambient temperature varies. The spectral filter used for ASE reduction will require a band-pass large enough to accommodate temperature-induced variations in the master laser diode output wavelength. However, the effectiveness of spectral filtering relies on the ability to make the pass band of the filter as small as possible relative to the bandwidth of the ASE. Our solution is to use an ASE spectral filter that has a matched (or nearly matched) temperature response to the temperature response of the master laser diode.

**Temporal Filtering of the Signal**

The ASE output is usually significantly more spread over time than the signal pulse. Temporal filtering of the output (introducing a short time gate synchronized to the input pulse timing) can eliminate much of the ASE, but does not solve the issue of the reduction in signal power in the amplifier resulting from the ASE gain competition. However, one can consider a multi-stage amplifier in which the temporal filtering is implemented between stages (such an implementation might also include a temporal filter in a multi-pass amplifier configuration). In this instance, ASE gain competition in amplifier stages following the temporal filter is reduced and signal output level is increased.

**Modulation of the Pump Diode in Synchronization with the Signal Pulse**

In the standard MOPA configuration, the pump diodes remain on at all times. This allows for the recovery of gain in the time between the pulses but also the detrimental build up of ASE. The longer the time between pulses, the greater the fraction of the pump power that is converted to ASE and not to signal. To circumvent this, we propose turning on the pumps for only a short time before the input of the signal pulse and in effect limiting the amount of pump light that is converted to ASE. In practice, the total time-averaged output power of the MOPA (ASE plus signal output) will be limited by pump power/pump time product. In other words, a reduction in the time that the pumps are on will result in a reduction in total time-averaged output power. However, the fraction of the total output power that is in the signal will increase as the pump on times are shortened. If the pump powers are increased accordingly, the energy-per-pulse in the signal may be kept constant while the amount of ASE is reduced.

**3. Detailed Description of the Invention**

**General MOPA Configuration**

The master oscillator will typically be a semi-conductor diode laser with a single-mode fiber output. The material and structure of the master oscillator laser will be chosen to provide the required output wavelength. The master oscillator may be a Fabry-Perot diode laser, a Fabry-Perot diode laser wavelength stabilized by a fiber Bragg grating, a Fabry-Perot diode laser stabilized by a coupled cavity with a wavelength selective element, a distributed feedback (DFB) diode laser, a Fabry-Perot type rare earth-doped fiber or wave-guide laser, or a distributed feedback type rare earth-doped fiber or wave-guide laser. The output of the master oscillator may be linearly polarized or not. The master oscillator may be temperature controlled or not (un-cooled) .The output of the master oscillator may be pulsed by either directly pulsing the drive current to the laser diode or by placing on the output of the laser diode a fiber pigtailed component that has electronically controllable transmission. Such a device may be, for example, an acoustic-optic modulator (AOM), a voltage controlled optical attenuator (VOA), an electro-optic modulator (EOM), a semiconductor optical amplifier (SOA), a electro-absorptive modulator (EAM), or some combination of these. The formed pulses may have a fast rise leading edge in order to maximize peak power for a given energy-per-pulse after amplification. The formed pulses may have a slowly ramped leading edge in order to minimize peak power for a given energy-per-pulse after amplification. Pulses can be carved by relying on several concatenated external modulators separated or not by passive and active optical components.

The pulse output is increased in energy by the use of one or more fiber amplifier stages. Typically all stages consist of rare earth-doped fiber gain sections. The rare earth-doped fibers can be of conventional design or may be photonic crystal fibers. Some or all of the amplifiers gain sections may also be rare-earth-doped waveguides. Some or all of the rare earth-doped fibers or waveguides may be either polarization maintaining or non-polarization maintaining. The fiber or waveguide gain sections may be single-mode, quasi-single mode, or multimode, at the signal wavelength.. Fiber or wave-guide gain section or sections can be placed before or after the external modulator used to generate pulses. If the desired output wavelength is in the range 1000-1150nm the dopant for all stages may be Yb. If the desired emission wavelength is in the range 1520-1620nm the dopants for all stages may be either Er alone or Er and Yb together. If the desired wavelength is in the range 1700-2200nm the dopant for all stages may be Tm. Other desired output wavelengths may use other rare earths that possess gain in the appropriate region. Each amplifier stage may use either single mode pumping (injecting light from a single mode pump diode directly into the doped core region of the gain fiber or waveguide) or double clad pumping (coupling light from a broad area multimode pump diode into a clad region in the gain fiber). The pump diodes may be either cooled or un-cooled. The pumping may be either co- or counter-propagating, or both co- and counter-propagating, with the signal from the master oscillator. In some implementations any given stage may be used in a double pass configuration. In a double pass configuration the input into the amplifier stage has an optical circulator with the signal input being passed into the amplifier stage. A reflecting element is placed at the distal end of the amplifier stage such that the signal is reflected back into the amplifier stage for a second pass. After the second pass, the signal re-enters the optical circulator located at the input end and is passed to the output arm.

The final output of the MOPA may be linearly polarized with well-defined direction of polarization, randomly polarized, or in some other state of polarization.

The various components comprising the laser topologies may be assembled with different components and methods of assemblies: by splicing fiber pigtails, free alignment with micro optics parts, mounting on a optical sub-mount, or part of a monolithic wave-guide assemblies. In all embodiments passive and active components may be protected by optical isolators.

**Spectral Filtering**

Each amplifier stage will generate amplified stimulated emission (ASE). The ASE output from any stage will be passed on and amplified in subsequent stages. The build up of ASE in this process proportionally reduces the energy available in the signal pulses. The ASE output is distributed in wavelength over the emission curve of the rare earth dopant, from ten's to hundred's of nanometers wide. The signal is typically less than 1nm wide spectrally. Thus, the amount of ASE passed from early to later stages can be greatly limited, without effecting the signal, by placing an optical element that transmits at the signal wavelength while blocking the transmission at other wavelengths. In general the spectral filter may serve as a narrow wavelength band-pass, a short wavelength pass, or a long wavelength pass.

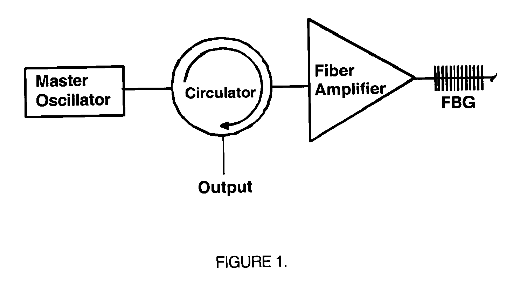

In one embodiment of ASE filtering (Figure 1) the amplifier consists of a single gain section that is used in a double pass configuration. A spectrally selective reflective element is placed at the distal end of the gain section. This element may be a fiber Bragg grating (FBG). The FBG may be chirped or un-chirped. An optical circulator extracts the reflected signal from the input end of the gain section.

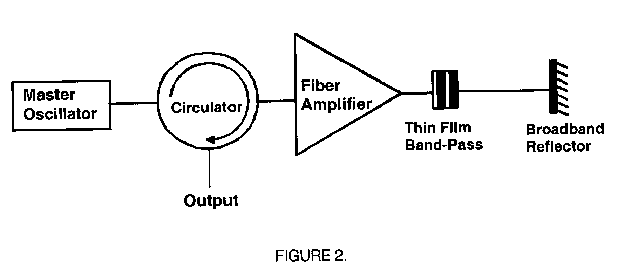

In the single stage double pass configuration, the purely reflective filter may be replaced with a spectrally selective transmission element followed by reflector, either broadband or narrower (Figure 2). The transmission element may be a thin film filter, a fused-tapered fiber wavelength demultiplexer (WDM), a long period grating (LPG) pair, or a Fabry-Perot type filter. The filter may be either narrow pass or a short or long wavelength edge filter.

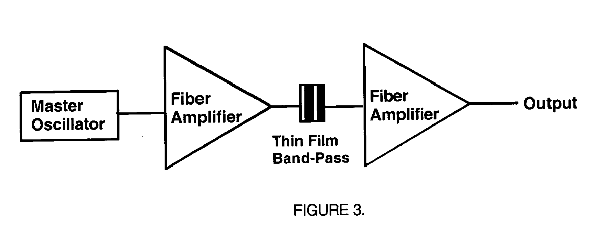

In a second embodiment there are two amplifier stages. A spectrally selective transmission element is located between the two stages (Figure 3). The transmission element may be a thin film filter, a fused-tapered fiber wavelength demultiplexer (WDM), a LPG pair, or a Fabry-Perot type filter. The filter may be either narrow pass or a short or long wavelength edge filter.

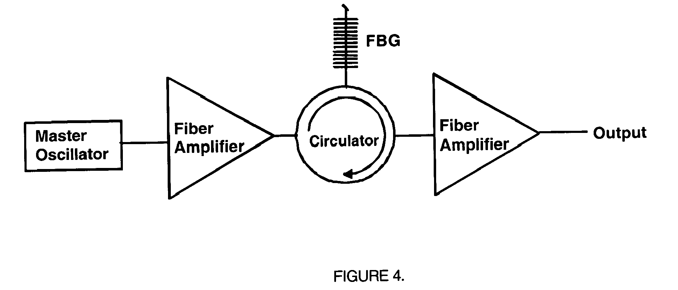

A modification of the second embodiment is to replace the transmission element with a reflective filter (for example an FBG, chirped or un-chirped) connected to a optical circulator (Figure 4).

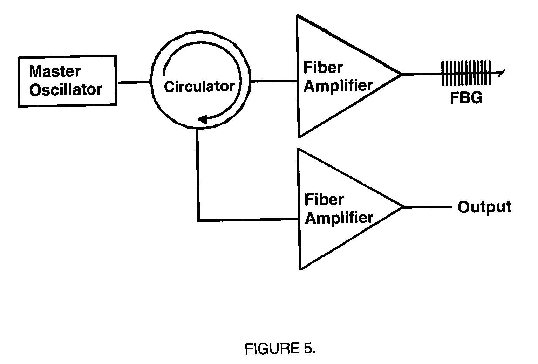

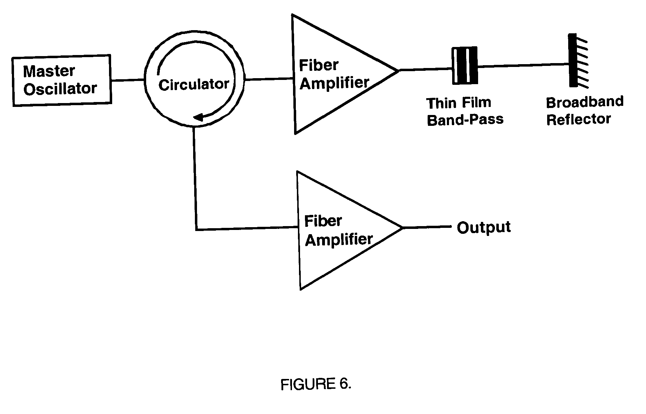

A third embodiment is a two-stage amplifier with a double pass first stage. A spectrally selective reflective element is placed at the distal end of the first stage. The spectrally selective reflective element may be a single element such as a FBG (chirped or un-chirped) (Figure 5) or a transmission element, such as a thin film filter, a fiber WDM, a LPG pair, or a Fabry-Perot type filter, used in conjunction with a reflective element (Figure 6). The reflected signal is extracted from the input end of the first stage using an optical circulator and inputted into the second stage. Additional spectral filtering may be implemented between the output of the first stage and the input of the second using the techniques described previously.

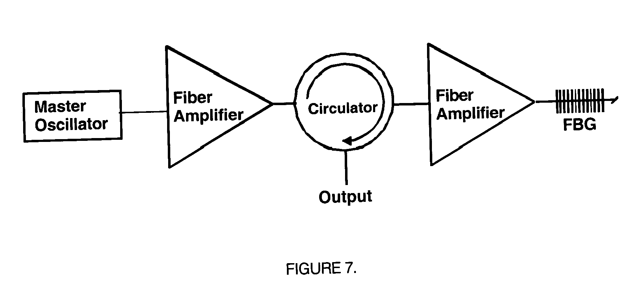

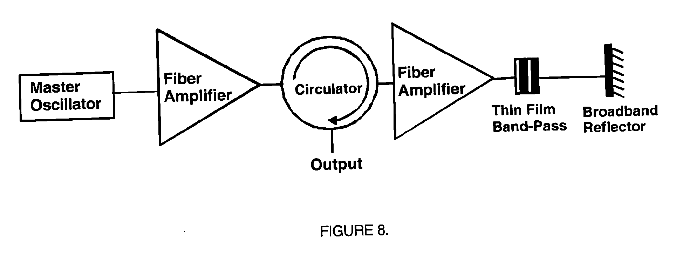

A fourth embodiment is a two-stage amplifier with a double pass on the second stage. The signal is amplified by a single pass first stage. The output of the first stage is passed to the second stage. Additional spectral filtering may be implemented between the output of the first stage and the input of the second using the techniques described previously. A spectrally selective reflective element is placed at the distal end of the second stage. The spectrally selective reflective element may be a single element such as a FBG (chirped or un-chirped) (Figure 7) or a transmission element, such as a thin film filter, a fiber WDM, a LPG pair, or a Fabry-Perot type filter used in conjunction with a reflective element (Figure 8). The reflected signal is extracted from the input end of the second stage using an optical circulator.

Additional embodiments would include all different combinations of the previously described configurations and would also include use of multiple spectral filter elements. Additional embodiments would also include the addition of more amplifier stages with inter-stage and double pass spectral filtering as described previously.

All the previous embodiments describe techniques for decreasing the ASE output while increasing the signal output. In all described configurations it is possible to further decrease the ASE output, without significantly affecting the signal output, by adding a spectrally selective element to the output of the last amplifier stage.

**Spectral Filtering with no Temperature Control on the Master Oscillator.**

In many applications overall power consumption needs to be kept at a minimum. This is especially true of devices for which power is supplied by batteries. One significant means of lowering power consumption is to turn off all, or some, temperature control in the MOPA. Temperature control requires a large power consumption if the set operating temperature of the component under control is very different than the ambient temperature. This is especially true if the component under control needs to be cooled and especially true if the component also generates its own heat. In the described MOPA the components that are commonly temperature controlled are the master oscillator diode and the pump diode(s) for the fiber amplifiers. For both types of diodes (master oscillator and pump) output wavelength is typically dependent on temperature. The variation in wavelength of a non-temperature controlled pump diode(s) does not significantly affect the MOPA performance if the pump wavelength is selected to be in a wavelength region for which the rare-earth dopant absorption is relatively insensitive to wavelength. For instance, the absorption of Yb does not vary significantly between 915 and 960nm. The variation in wavelength of a non-temperature controlled master oscillator diode does not significantly affect the MOPA performance if the rare earth dopant gain is relatively flat over the extent of the wavelength variation and also if there are no wavelength selective elements in the MOPA. The wavelength dependence of the rare earth dopant gain is typically not a significant issue. However, the temperature dependent wavelength variation of the non-temperature controlled (un-cooled) master oscillator output is a significant problem if a narrow-band spectrally selective filter is used in the MOPA to limit ASE, as described in the previous section. In this section we teach different methods to use a spectrally selective ASE filter in conjunction with a non-temperature controlled (un-cooled) master oscillator for a MOPA operating over a wide ambient temperature range. Use of an un-cooled master oscillator also can shorten the MOPA turn-on time because proper function of the MOPA does not require waiting for the master oscillator temperature to be adjusted to its operating value.

In general, the output wavelength of master laser diode is a function of temperature. Thus, the output wavelength of an un-cooled laser diode will vary as the ambient temperature varies. For instance, a typical distributed feedback laser (DFB) operating at 1550nm has a wavelength-temperature coefficient on the order of +0.1nm/°C. This temperature coefficient leads to an output wavelength shift of 11 nm for an operating temperature range of -40°C to 70°C. A typical Fabry-Perot laser diode (FPL) operating at 1550nm has a wavelength-temperature coefficient on the order of +0.4nm/°C. This temperature coefficient leads to an output wavelength shift of 44nm for an operating temperature range of -40°C to 70°C.

This level of temperature-dependent master oscillator wavelength variation makes the application of the spectral filtering techniques, described in Section 4.1, problematic. The spectral filter element acceptance band must be broad enough such that signal wavelength remains inside the band as the temperature varies. Consider the example of a DFB master oscillator with a spectral filter employing a FBG (chirped or un-chirped). The FBG central wavelength has a temperature coefficient of approximately +0.01nm/°C (near 1550nm). The change in wavelength with temperature is in the same direction as the DFB response, however, the magnitude of the change is smaller by a factor of ten. Thus, the minimum spectral width required for the FBG in order to accommodate a temperature change, $\Delta T$, is given by,

$$\Delta\lambda(\mathrm{nm}) \approx 0.1\left(\mathrm{nm/^\circ C}\right)\Delta T\left(^\circ C\right) - 0.01\left(\mathrm{nm/^\circ C}\right)\Delta T\left(^\circ C\right). \qquad \text{Eq. 1}$$

If $\Delta T$ is 110°C (-40°C to 70°C), the FBG is required to have a width of 9.9nm. This large width significantly reduces the effectiveness of the filter for removal of ASE, considering that the ASE for Er and Er/Yb fibers is spread over approximately only 30nm. We teach two general approaches for the minimization of this problem.

The first general approach is to select or modify the spectral filter to have a wavelength-temperature coefficient that matches, or nearly matches, the wavelength-temperature coefficient of master oscillator. We call this the matched filter approach. This can be done either passively or actively.

In one embodiment of this general approach we use an FBG (chirped or un-chirped) as the filter element. The central reflection wavelength of the FBG ($\lambda_B$) is a function of effective fiber core index ($n_{eff}$) and period of index modulations in the grating ($\Lambda$),

$$\lambda_B = 2n_{eff}\Lambda. \qquad \text{Eq. 2}$$

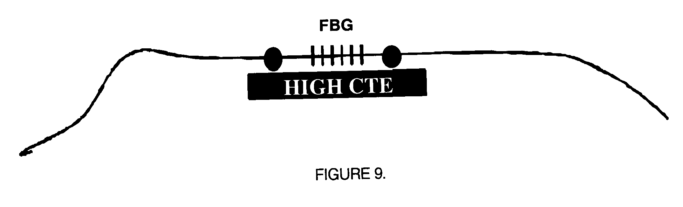

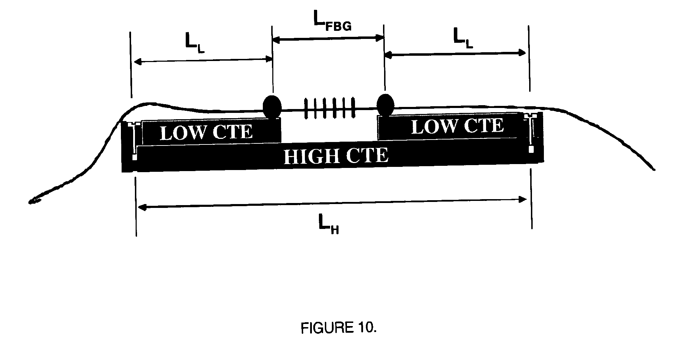

For an un-mounted FBG temperature dependent changes in the reflection wavelength are approximately 10 parts-per-million/°C (ppm/°C). The dependence is primarily the result of the temperature dependence of the index of refraction (9 ppm/°C). The change in the grating periodicity as a result of the thermal expansion of the fiber, coefficient of thermal expansion (CTE), contributes the majority of the balance of the temperature dependence, but is still only 1 ppm/°C. However, the effect of temperature dependent change in the grating periodicity may be greatly enhanced if the FBG is firmly attached at to a material that has a significantly higher CTE than the fiber (Figure 9). For instance, if the mounting material is Aluminum, the CTE of the FBG will be increased to approximately 25 ppm/°C (0.039nm/°C near 1550nm). To improve this result one could either simply use a higher CTE material for mounting or use a mechanical design that amplifies the effect of the CTE of the mounting material. Displayed in Figure 10 is a simple mechanical configuration that uses a high CTE material and low CTE material to amplify the stretching effect on the fiber. The fractional change in the FBG length ($\Delta L_{FBG}/L_{FBG}$) (and the FBG periodicity) as a function of the temperature change ($\Delta T$) is given by

$$\frac{\Delta L_{FBG}}{L_{FBG}} = \left[ \left( CTE_H - CTE_L \right) \frac{L_H}{L_{FBG}} + CTE_L \right] \Delta T, \qquad \text{Eq. 3}$$

in which $CTE_L$ and $CTE_H$ are the coefficient's of thermal expansion of the low and high CTE mounting materials, respectively, and $L_H$ is the length of the high CTE mounting material. In the limit that $CTE_L$ becomes very small, the fractional change in FBG length is given by,

$$\frac{\Delta L_{FBG}}{L_{FBG}} \approx CTE_H \left( \frac{L_H}{L_{FBG}} \right) \Delta T. \quad \text{Eq. 4.}$$

The effect of the high CTE may be enhanced by a factor equivalent to the ratio of the lengths of the high CTE material to the FBG length. The limitations on the enhancement of the CTE are the rigidity of the attachment of the FBG to the low CTE material and the mechanical strength of the fiber under stretching. Optical fibers are typically proof tested between 100 to 250 kpsi (0.8 to 2.0 Kilograms for standard cross-section). This proof range corresponds to strains of 1,000ppm to 2,500ppm for a typical fiber. These strains correspond to changes in FBG reflection wavelength (1550nm) of 15.5 to 38.8nm, respectively. Of course, once a fiber is stripped and exposed to the environment the strength of the fiber can degrade. To further alleviate danger of breakage, the fiber may be supported axially such that it can be both compressed and stretched. In such a configuration, the FBG should easily be able to match a DFB wavelength response for the temperature range -40°C to 70°C (11nm for 1550nm).

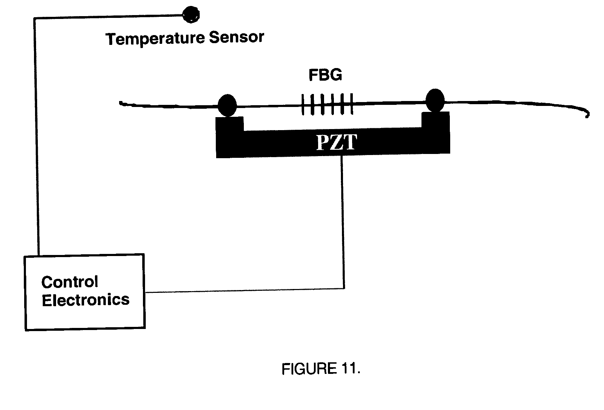

The passively adaptable method described above can also be implemented using an active method. A basic a configuration would include a device to measure the temperature of the system and a means to mechanically stretch or compress the FBG (chirped or un-chirped) as controlled by the temperature sensor (Figure 11). The electronically controlled mechanical stretcher/compressor could be a piezo-electric transducer (PZT). It would be necessary to calibrate the movement of the FBG with the temperature dependent wavelength response of the master laser diode.

Another form of active control would use a Fabry-Perot type transmission filter. A basic a configuration would include a device to measure the temperature of the system and a means to mechanically change the cavity spacing in the Fabry-Perot type transmission filter as controlled by the temperature sensor. The electronically controlled mechanical spacer could be a piezo-electric transducer (PZT). It would be necessary to calibrate the movement of the Fabry-Perot cavity with the temperature dependent wavelength response of the master laser diode.

In another embodiment of the matched filter approach, we use a thin-film dielectric stack as the filter element. Optical transmission (and reflection) wavelength filters can be constructed using alternating layers of high and low index dielectric materials typically deposited on a glass substrate. The transmission (reflection) wavelength of such a filter is dependent on thickness of the layers, the indices of the materials used, and the angle of incidence of the incident light. Through careful choice of the dielectric materials, a filter may be constructed that has a wavelength-temperature coefficient of 0.05nm/°C at a fixed angle of incidence. Such a filter would require only a 5.5nm wide band-pass to accommodate the temperature response of a DFB over the operating range -40°C to 70°C.

The temperature may also be used to control the angle of incidence of the light on the filter. The largest (longest) wavelength of transmission (reflection) occurs for light normally incident (angle-of-incidence=0°) on the filter. The transmission (reflection) wavelength decreases as the angle-of-incidence is increased. The filter may be mounted such that it can be rotated with little force applied. A lever arm, whose position is dependent on temperature through thermal expansion effect, may be used to apply force sufficient to rotate the filter as the temperature is varied. Such a thermally dependent lever arm could be a bimetallic strip, for example. For the lowest anticipated operating temperature, the filter would be placed at an angle ( >0° ) such that the transmission wavelength was equal to the DFB wavelength at that temperature. The temperature dependent lever arm would be positioned such that its movement would calibrate the transmission (reflection) wavelength of the filter with the temperature dependent DFB wavelength.

The transmission (reflection) wavelength of the filter may also be controlled through active control. A basic configuration would include a device to measure the temperature of the system and a means to mechanically rotate the thin film filter as controlled by the temperature sensor. The electronically controlled rotator could be a piezo-electric transducer (PZT) or a galvanometer. It would be necessary to calibrate the movement of the thin film filter with the temperature dependent wavelength response of the master laser diode.

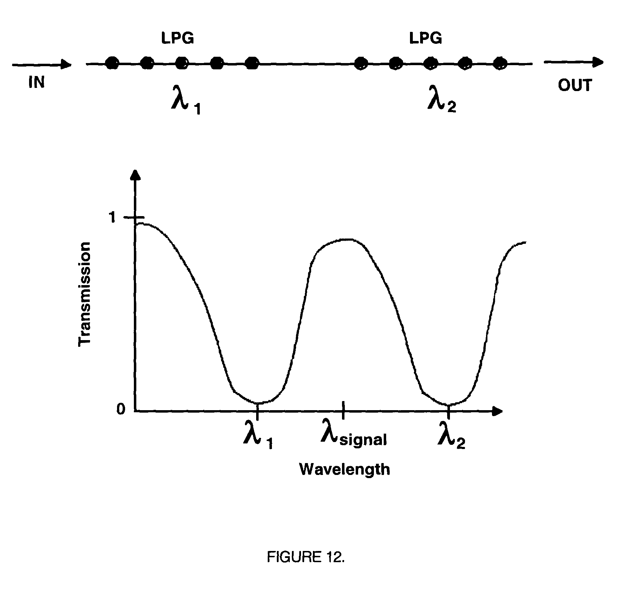

In another embodiment the matched filter uses a long period grating (LPG) as a part of the filter. A LPG is similar to a FBG in that they are both constructed by creating periodic fluctuations in the core of a single-mode optical fiber. However, the LPG couples light from the single core mode to one of many possible cladding modes with propagation in the same direction (the FBG couples light from the forward propagating core mode to the core mode propagating in the reverse direction). The LPG has a much longer period than the FBG, 100's of microns compared to less than 1 micron. The LPG resonance is broad, 10's of nm, owing to the large number of cladding modes available for scattering. The LPG acts as transmission band block (light in a band of 10's of nm is scattered and lost into the cladding). The LPG has a relatively high wavelength-temperature coefficient on the order of 0.05 to 0.2nm/°C at 1550nm and the sign of the coefficient is dependent on the material composition of the fiber core and clad. It is the large magnitude of the wavelength-temperature coefficient that may be utilized to make a filter matched to the response of the master oscillator. Displayed in Figure 12 is one implementation for a matched transmission filter. The two LPG's are created such that their band block center wavelengths at a given temperature are located above and below the master oscillator wavelength. The LPG's act to block ASE at wavelengths lesser and greater than the master oscillator while transmitting the master oscillator wavelength with minimal loss. Further, the LPG's are both designed to have the same wavelength-temperature coefficient (magnitude and sign) as the master oscillator. Thus, the band-pass they create will move in harmony with the master oscillator wavelength as the temperature varies.

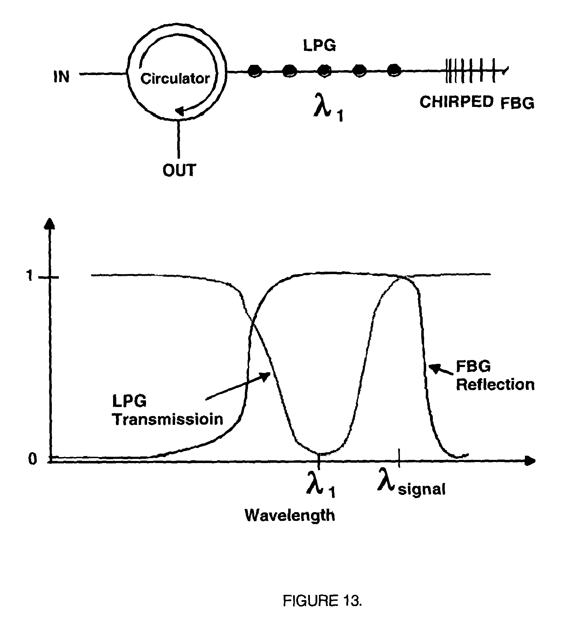

Displayed in Figure 13 is another filter that uses a LPG. The filter consists of an LPG and a chirped (broad-band) FBG. There are two methods of implementation of the filter. In one implementation the signal wavelength is greater than the center wavelength of the LPG (Figure 13). In this case, the LPG is constructed such that at the highest operating temperature the LPG just passes the master oscillator wavelength, but blocks ASE light at shorter wavelengths. The broad FBG is constructed such that its reflection band covers the master oscillator wavelength over the entire operating temperature range. Thus, the LPG serves to cutoff ASE at shorter wavelengths while the FBG serves to cutoff ASE at longer wavelengths. Furthermore, the LPG is designed such that its wavelength-temperature coefficient matches the wavelength-temperature coefficient for the master oscillator. Thus, the lower band pass edge moves to accommodate the master oscillator wavelength as temperature is decreased. The bandwidth of the filter increases somewhat as the temperature decreases, unless the broad-band FBG wavelength-temperature coefficient is increased to also match the master oscillator using some of the methods previously described. In the other implementation the signal wavelength is smaller than the center wavelength of the LPG. In this case, the LPG is constructed such that at the lowest operating temperature the LPG just passes the master oscillator wavelength, but blocks ASE light at shorter wavelengths. The broad FBG is constructed such that its reflection band covers the master oscillator wavelength over the entire operating temperature range. Thus, the LPG serves to cutoff ASE at longer wavelengths while the FBG serves to cutoff ASE at shorter wavelengths. Furthermore, the LPG is designed such that its wavelength-temperature coefficient matches the wavelength-temperature coefficient for the master oscillator. Thus, the lower band pass edge moves to accommodate the master oscillator wavelength as temperature is decreased. The bandwidth of the filter increases somewhat as the temperature increases, unless the broad-band FBG wavelength-temperature coefficient is increased to also match the master oscillator using some of the methods previously described.

In all the previous embodiments, it can be necessary that the LPG wavelength-temperature coefficient is increased to also match the master oscillator using some of the methods previously described for FBG.

The second general approach is to lock the output wavelength of the master oscillator using a spectral locker that has the same temperature response as the spectral filter used in the amplifier.

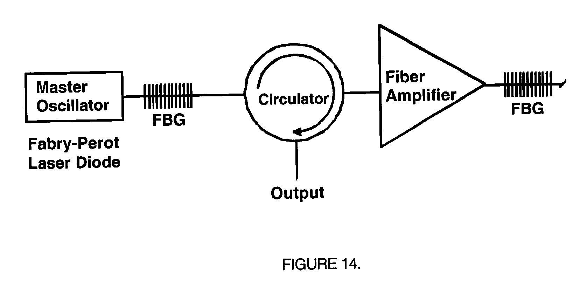

One embodiment of this approach is to use a FBG to reflect a fraction of the output from a Fabry-Perot laser diode back into the laser diode. If the center wavelength and reflection strength of the FBG are chosen properly, the output wavelength of the Fabry-Perot/ FBG combination will be locked at the center wavelength of the FBG. The wavelength-temperature coefficient of the combination will be the same as the wavelength-temperature coefficient of the locking FBG. Thus, the master oscillator will have the same wavelength-temperature coefficient as any spectral filter used in the amplifier if they are constructed using the same type of FBG (Figure 14).

**Temporal Filtering of the Signal**

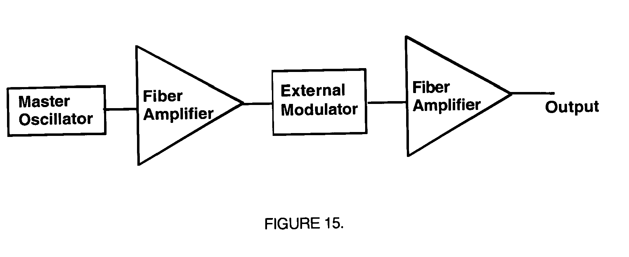

Each amplifier stage will generate amplified stimulated emission (ASE). The ASE output from any stage will be passed on and amplified in subsequent stages. The build up of ASE in this process proportionally reduces the energy available in the signal pulses. The ASE output is present at some level for all times during which the pump is on. The ASE will be the least during a signal pulse or immediately following the signal pulse. If the pump diode is on continuously, the ASE will build up in between pulses, reaching a maximum value immediately preceding the next pulse. If the duty cycle of the signal (fraction of time signal is on) is small, we may temporally filter a large fraction of ASE output power from an amplifier stage by blocking transmission at the output during times in which the signal is not present. In such a way, the amount of ASE passed from early to later stages can be greatly limited, without affecting the signal. The device used to temporally block transmission may be, amongst other possible devices, either an electro-optic modulator (EOM), an acousto-optic modulator (AOM), a semi-conductor optical amplifier (SOA), a voltage-controlled optical attenuator (VOA), or an electro-absorptive filter (EAM). The temporal transmission devices are electrically synchronized to the electronic signal used for triggering the pulses in the master oscillator (either through internal or external modulation). In cases in which an external modulator is used to generate the pulses out of the master oscillator it may be beneficial to place an amplifier directly after the master oscillator and before the external modulator (Figure 15). This is especially valid if the modulator insertion loss is high and/or the duty cycle is low. Placement of the amplifier before the modulator in these cases maintains relatively high average signal input power into the following amplifier stage, lowering ASE output from this following stage.

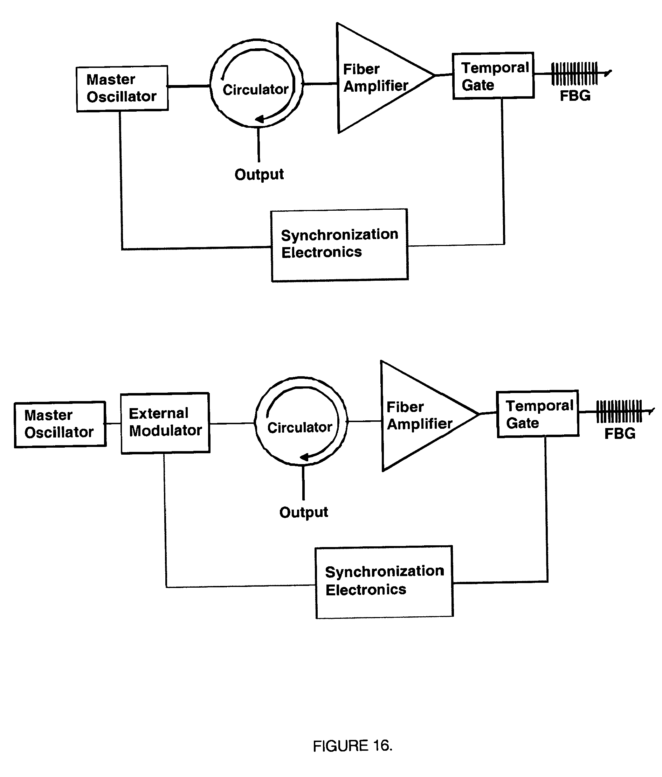

In one embodiment of temporal filtering (Figure 16) the amplifier consists of a single gain section that is used in a double pass configuration. A temporally selective element is placed at the distal end of the gain section. The temporally selective element is followed by a reflective element. This reflective element may be either broad band spectrally or spectrally selective, such as a FBG. The reflected signal passes back through the temporally selective element. Note that the temporally selective element must stay on long enough for the signal to double pass through it. An optical circulator extracts the reflected signal from the input end of the gain section.

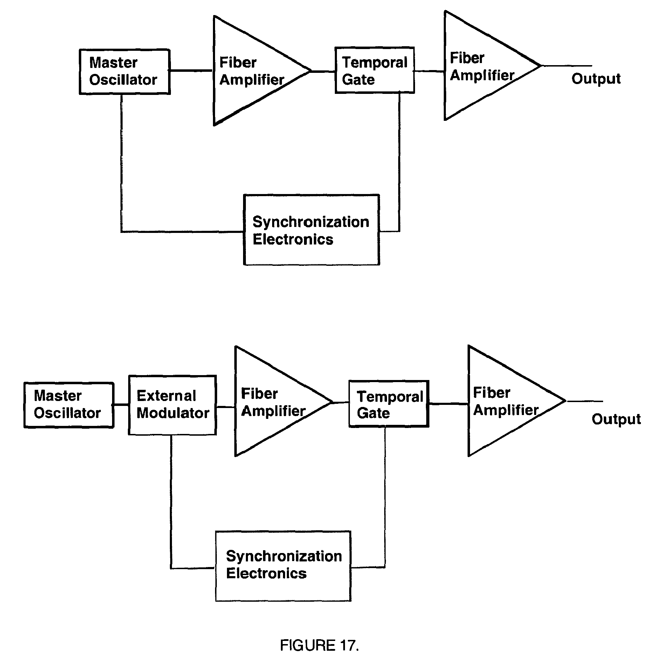

In a second embodiment there are two amplifier stages. A temporally selective transmission element is located between the two stages (Figure 17).

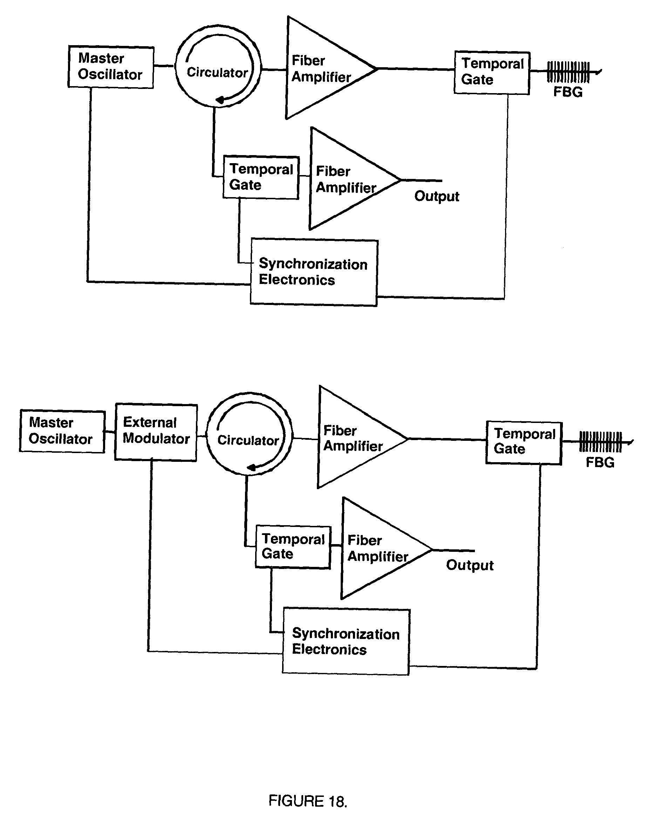

A third embodiment is a two-stage amplifier with a double pass first stage (Figure 18). A temporally selective element is placed at the distal end of the first stage. The temporally selective element is followed by a reflective element. This reflective element may be either broad band spectrally or spectrally selective, such as a FBG. The reflected signal passes back through the temporally selective element. Note that the temporally selective element must stay on long enough for the signal to double pass through it. A spectrally selective reflective element is placed at the distal end of the first stage. The reflected signal is extracted from the input end of the first stage using an optical circulator and inputted into the second stage. Additional temporal filtering may be implemented between the output of the first stage and the input of the second using the techniques described previously.

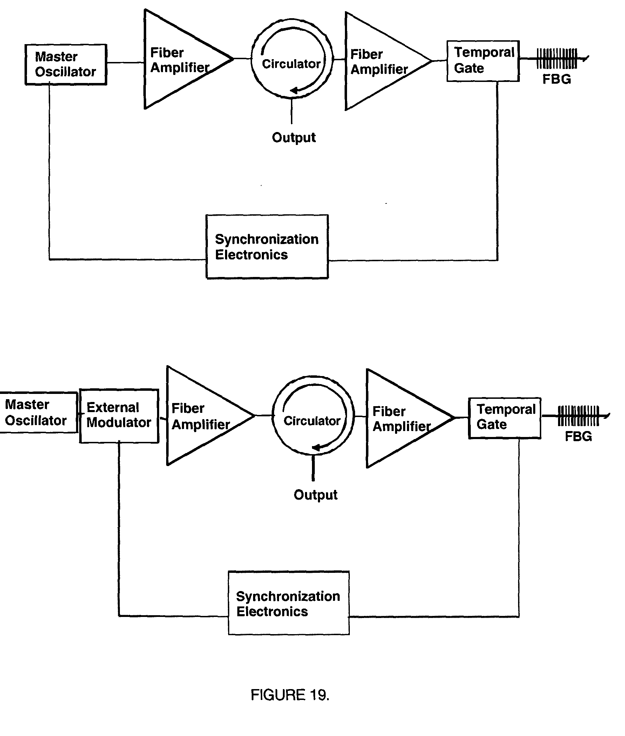

A fourth embodiment is a two-stage amplifier with a double pass on the second stage (Figure 19). The signal is amplified by a single pass first stage. The output of the first stage is passed to the second stage. Additional spectral filtering may be implemented between the output of the first stage and the input of the second using the techniques described previously. A temporally selective element is placed at the distal end of second stage. The temporally selective element is followed by a reflective element. This reflective element may be either broad band spectrally or spectrally selective, such as a FBG. The reflected signal passes back through the temporally selective element. Note that the temporally selective element must stay on long enough for the signal to double pass through it. The reflected signal is extracted from the input end of the second stage using an optical circulator.

Additional embodiments would include all different combinations of the previously described configurations and would also include use of multiple temporally selective elements. Additional embodiments would also include the addition of more amplifier stages with inter-stage and double pass temporal filtering as described previously.

All the previous embodiments describe techniques for decreasing the ASE output while increasing the signal output. In all described configurations it is possible to further decrease the ASE output, without significantly affecting the signal output (assuming low insertion loss for the spectrally selective element), by adding a spectrally selective element to the output of the last amplifier stage.

**Modulation of the Pump Diode in Synchronization with the Signal Pulse**

In the standard MOPA configuration, the pump diodes remain on at all times. This allows for the recovery of gain in the time between the pulses but also the detrimental build up of ASE. The longer the time between pulses, the greater the fraction of the pump power that is converted to ASE and not to signal. To circumvent this, we propose turning on the pumps for only a short time before the input of the signal pulse and, in effect, limiting the amount of pump light that is converted to ASE. In practice, the total time-averaged output power of the MOPA (ASE plus signal output) will be limited by pump power/pump time product. In other words, a reduction in the time that the pumps are on will result in a reduction in total time-averaged output power. However, the fraction of the total output power that is in the signal will increase as the pump on times are shortened. If the on time pump powers are increased accordingly, the energy-per-pulse in the signal may be kept constant, or increased, while the amount of ASE is reduced. For low duty cycle operation, the pump diode(s) can be driven at higher than nominal levels without excessive heating or damage, and resulting in greater energy-per-pulse in the signal.

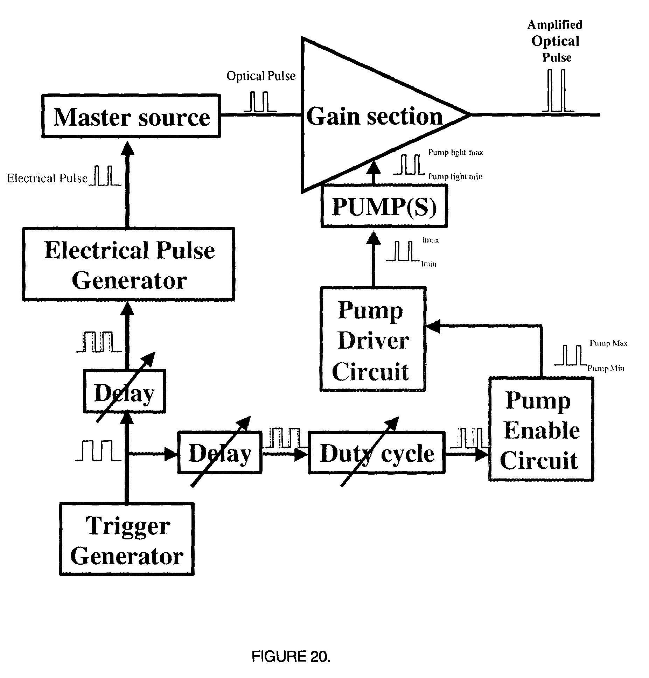

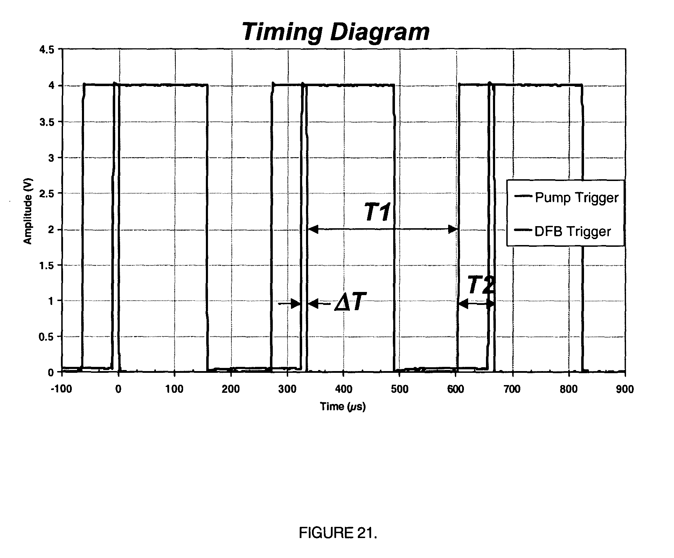

The principle of the invention is to turn off the pump(s) between successive signal pulses. There are two synchronized electrical signals, one for the pump(s) trigger and one for the master oscillator (or master oscillator external modulator) trigger. A high-level electronic block diagram of the synchronized trigger circuit is displayed in Figure 20. A typical timing diagram for the synchronization of the two triggers is displayed in Figure 21. The example uses square waves as an illustration, however, trapezoidal, triangular, other shapes may be employed to further reduce ASE while maintaining lower pump currents. T1 is the time when the pump is OFF and T2 is the time when it is ON. The master oscillator pulse is launched on the rising edge of its trigger signal. $\Delta T$ is the time when the pump is still ON after the pulse ($<2\mu s$). In some instances, the pump signal overlap, $\Delta T$, may be 0. The pump is turned ON before the signal pulse in order to build up sufficient gain in the amplifier.

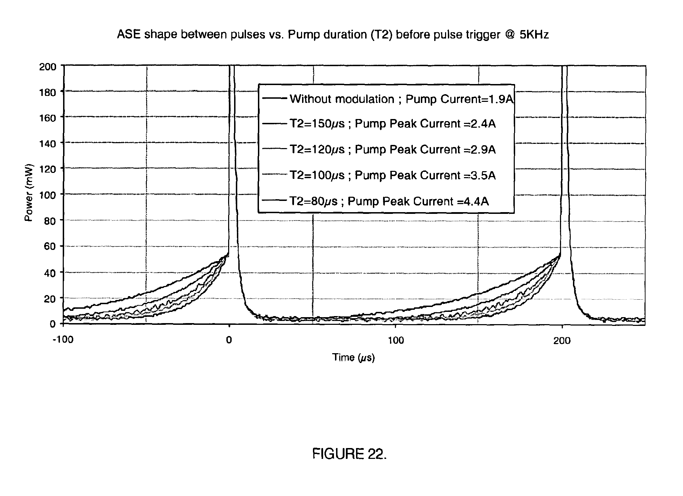

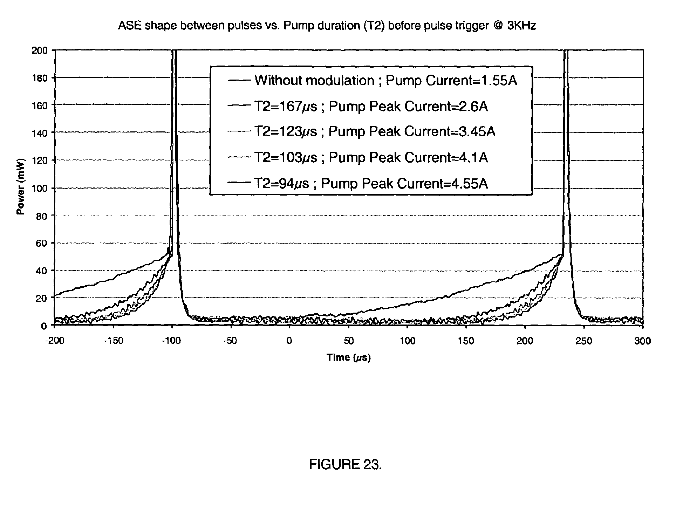

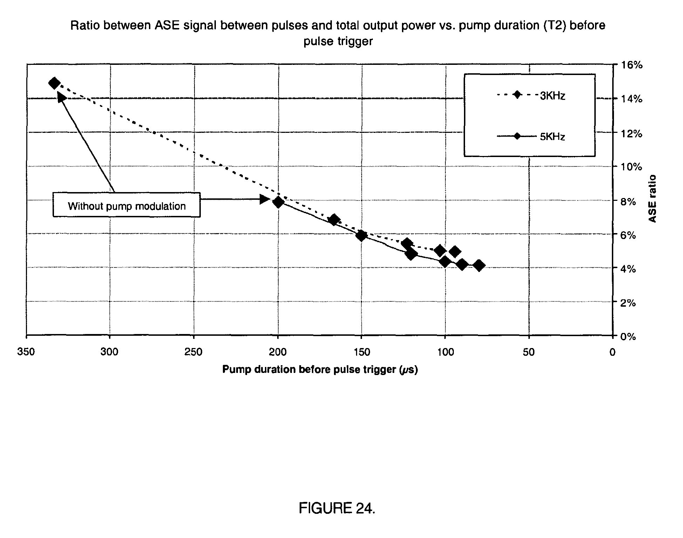

Displayed in Figures 22 is an example of the output power of ASE as a function of time for a 50ns wide signal at a 5kHz repetition rate with varying degrees of pump modulation. T2 (Pump ON) has been varied from $80\mu s$ to no modulation ($200\mu s$). The ON pump current was varied in order to maintain constant output energy per pulse of approximately $40\mu J$. The shorter T2 (Pump ON) is, the higher is the current required to obtain the required output energy per pulse. However, we observe a significant decrease in the ASE output power as T2 is decreased. The same plot is displayed in Figure 23 for a 50ns wide signal at a 3kHz repetition rate. Again the ON pump current is varied in order to maintain constant output energy per pulse of approximately $40\mu J$. Displayed in Figure 24 is the percentage of total output power as ASE power for the two repetition rates as a function of ON pump time. Note the reduction in ASE as a percentage of total output power as the pump ON time is reduced. This effect is especially evident at the lower repetition rate of 3kHz. The effectiveness of the pump modulation method is even more evident for repetition rate from few Hz to 3kHz.

For the above examples the drive current to the pump was completely turned off during the pump OFF time. However, in general, the pump modulation can be a NRZ modulation with the OFF state current just below (or somewhat above) the threshold current for the pump diode. Operation in this mode allows for quicker switching of the pump diode.

## Claims

1.  A pulsed fiber laser system in a Master Oscillator Power Amplifier (MOPA) configuration comprising:

     A gain medium made with a wave-guide doped with at least one rare earth element,
     A source of pump energy configured to operate a first optical wavelength coupled to said gain medium to cause said medium to generate emission radiation,
     A master laser light source configured to generate signal pulses and operating at a second optical wavelength, which is injected into said optical gain medium to amplify said signal light, providing thereby amplified signal light,
     An amplified spontaneous emission (ASE) filter that permits transmission of a pass-band comprising the pulsed optical output signal and suppresses ASE generated by the amplifier, and
     Whereby the MOPA fiber laser system relies on methods of further ASE reduction which include one of the following means or combination of the following means: Spectral filtering means, temporal filtering means and pump modulation means.

2.  The pulsed fiber laser of claim 1 wherein the reduction of ASE via spectral filtering means consists in using a spectral filter matched, or nearly matched, temperature response to the temperature response of the master laser diode source, permitting narrower band spectral filtering and requiring no temperature controlled element,
     Said master oscillator being un-cooled or cooled,
     Said optical filter tuning being passively or actively implemented via mechanical or electronic controlled means.

3.  The pulsed fiber laser of claim 1 wherein the ASE reduction is implemented via the temporal filtering means which consists in the use of a temporal gate at the output of the amplification stage, whereby said gate opens in synchrony for a time long enough to permit transmission of the signal pulses and is closed, blocking transmission of the ASE, the rest of the time.

4.  The pulsed laser of claim 1 wherein ASE reduction is implemented via the pump modulation means, which consists in the pump diode source being energized in synchrony with the signal pulses, whereby said pump source is powered on only a short time prior to the input of the signal pulse resulting in the reduction of amount of pump light, that is converted to the generation of ASE.

5. The invention of claim 1 where the amplification stage includes a plurality of concatenated single pass or double pass amplifier subsystem stages,
Said each sub-system operating with different design, and including same or different ASE reduction means, whereby these said subsystem amplification sections are modular and independent, or constitute a monolithic MOPA system arrangement.

6. The pulsed master oscillator power amplifier (MOPA) laser system comprises optical, electronic, software and mechanical subsystems which make the laser system.

**Master Oscillator** — **Circulator** — **Fiber Amplifier** — **FBG**

Output

FIGURE 1.

FIGURE 2.

FIGURE 3.

FBG

Master
Oscillator

Fiber
Amplifier

Circulator

Fiber
Amplifier

Output

FIGURE 4.

```
Master          Circulator      Fiber          ||||||||||||
Oscillator                      Amplifier         FBG

                                Fiber          ——— Output
                                Amplifier
```

FIGURE 5.

EP 1 734 622 A1

FIGURE 6.

16

**Master Oscillator** — **Fiber Amplifier** — **Circulator** — **Fiber Amplifier** — **FBG**

**Output**

FIGURE 7.

Master Oscillator — Fiber Amplifier — Circulator — Fiber Amplifier — Thin Film Band-Pass — Broadband Reflector

Output

FIGURE 8.

**FBG**

HIGH CTE

FIGURE 9.

FIGURE 10.

**Temperature Sensor**

**FBG**

**PZT**

**Control Electronics**

FIGURE 11.

LPG                    LPG

IN                                              OUT

$\lambda_1$                    $\lambda_2$

1

Transmission

0

$\lambda_1$    $\lambda_{signal}$    $\lambda_2$

Wavelength

FIGURE 12.

**FIGURE 13.**

FIGURE 14.

FIGURE 15.

FIGURE 16.

FIGURE 17.

FIGURE 18.

Master
Oscillator — Fiber Amplifier — Circulator — Fiber Amplifier — Temporal Gate — FBG

Output

Synchronization Electronics

Master
Oscillator — External Modulator — Fiber Amplifier — Circulator — Fiber Amplifier — Temporal Gate — FBG

Output

Synchronization Electronics

FIGURE 19.

FIGURE 20.

FIGURE 21.

ASE shape between pulses vs. Pump duration (T2) before pulse trigger @ 5KHz

FIGURE 22.

ASE shape between pulses vs. Pump duration (T2) before pulse trigger @ 3KHz

FIGURE 23.

Ratio between ASE signal between pulses and total output power vs. pump duration (T2) before pulse trigger

FIGURE 24.

**European Patent Office** **EUROPEAN SEARCH REPORT**

Application Number

EP 05 29 1269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ROCHAT E ET AL: "ALL-FIBER PHASE-MODULATED MASTER OSCILLATOR POWER AMPLIFIER FOR COHERENT COMMUNICATION" IEEE PHOTONICS TECHNOLOGY LETTERS, IEEE SERVICE CENTER, PISCATAWAY, NJ, US, vol. 12, no. 9, September 2000 (2000-09), pages 1162-1164, XP000962111 ISSN: 1041-1135 par. II * abstract; figure 1 * | 1 | H01S3/23 |
| A | | 2-7 | |
| Y | BALL G A ET AL: "60 MW 1.5 M SINGLE-FREQUENCY LOW-NOISE FIBER LASER MOPA" IEEE PHOTONICS TECHNOLOGY LETTERS, IEEE SERVICE CENTER, PISCATAWAY, NJ, US, vol. 6, no. 2, 1 February 1994 (1994-02-01), pages 192-194, XP000439747 ISSN: 1041-1135 par. I | 1 | |
| A | | 2-7 | TECHNICAL FIELDS SEARCHED (IPC) |
| Y | US 2004/213302 A1 (FERMANN MARTIN E ET AL) 28 October 2004 (2004-10-28) * paragraphs [0046], [0047], [0057]; figure 1c * | 1 | H01S |
| A | | 2-7 | |
| Y | US 6 151 338 A (GRUBB ET AL) 21 November 2000 (2000-11-21) * column 5, lines 55,FF.; figures 1,2 * * column 6, lines 17,FF. * | 1 | |
| A | | 2-17 | |

-/--

The present search report has been drawn up for all claims

| Place of search | Date of completion of the search | Examiner |
|---|---|---|
| Munich | 5 December 2005 | Bésuelle, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                            
& : member of the same patent family, corresponding document

EPO FORM 1503 03.82 (P04C01)

**European Patent Office**

**EUROPEAN SEARCH REPORT**

Application Number

EP 05 29 1269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 933 271 A (WAARTS ET AL) 3 August 1999 (1999-08-03) | 1 | |
| A | * column 15, line 58 - column 16, line 21 * * column 20, line 30 - line 43 * ----- | 2-7 | |
| | | | TECHNICAL FIELDS SEARCHED (IPC) |

The present search report has been drawn up for all claims

| Place of search | Date of completion of the search | Examiner |
|---|---|---|
| Munich | 5 December 2005 | Bésuelle, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 29 1269

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2005

| Patent document cited in search report | | Publication date | Patent family member(s) | | Publication date |
|---|---|---|---|---|---|
| US 2004213302 | A1 | 28-10-2004 | NONE | | |
| US 6151338 | A | 21-11-2000 | US | 6335941 B1 | 01-01-2002 |
| | | | US | 6433306 B1 | 13-08-2002 |
| | | | US | 6347007 B1 | 12-02-2002 |
| US 5933271 | A | 03-08-1999 | CA | 2242575 A1 | 24-07-1997 |
| | | | DE | 69717600 D1 | 16-01-2003 |
| | | | DE | 69717600 T2 | 17-04-2003 |
| | | | EP | 0875083 A2 | 04-11-1998 |
| | | | JP | 3567233 B2 | 22-09-2004 |
| | | | JP | 2000503476 T | 21-03-2000 |
| | | | WO | 9726688 A2 | 24-07-1997 |
| | | | US | 5930030 A | 27-07-1999 |
| | | | US | 5867305 A | 02-02-1999 |

EPO FORM P0459

For more details about this annex : see Official Journal of the European Patent Office, No. 12/82